# EUROPÄISCHE PATENTANMELDUNG

(11) **EP 2 043 374 A2**
(43) Veröffentlichungstag der Anmeldung: **01.04.2009**
(21) Anmeldenummer: 08105060.1
(22) Anmeldetag: 18.08.2008
(51) Int. Cl.: H04Q 1/14

(54) **Verteilereinrichtung**

(30) Priorität: 28.09.2007 DE 102007046433
(71) Anmelder: Siemens Aktiengesellschaft, 80333 München (DE)
(72) Erfinder: Schmitt, Reinhard, 76829, Landau (DE)

(57) **Zusammenfassung**

Die vorliegende Erfindung betrifft eine Verteilereinrichtung zur festen Verbindung von ankommenden Leitungen mit abgehenden Leitungen.

Um eine Trennung der eigentlichen Rangiereinheit von den übrigen Bauteilen der Verteilereinrichtung zu erreichen, sind die ankommenden und abgehenden Leitungen über Steckverbindungen mit einem die Rangierdrähte enthaltenen Rangiermodul verbunden.

## Beschreibung

Die vorliegende Erfindung betrifft eine Verteilereinrichtung zur festen Verbindung von ankommenden Leitungen mit abgehenden Leitungen.

Zur Steuerung und Regelung großer Industrieanlagen unterschiedlicher Ausprägung müssen von einer zentralen Steuereinrichtung große Mengen von Ein-/Ausgabesignale verarbeitet werden. Jede einzelne periphere Einrichtung, d.h. zum Beispiel jedes einzelne Feldgerät (Aktor / Sensor) muss am Ende einer Anlagenprojektierung über ein Feldkabel mit einem fest definierten Ein-/Ausgang der zentralen Steuereinrichtung elektrisch verbunden sein.

Es müssen daher tausende von elektrischen Verbindungen zwischen den peripheren Einrichtungen und der zentralen Steuereinrichtung mittels einer Verteilereinrichtung realisiert werden.

Für eine derartige Realisierung ist eine Verteilereinrichtung notwendig, welche folgende Anforderungen erfüllt:
- kürzeste Projektabwicklungszeit
- kostengünstigste Realisierung dieser Verbindungen
- höchste Verfügbarkeit der Verbindungen
- Erweiterungen und Änderungen von Signalverbindungen Vorort

Für eine Verteilereinrichtung zur Herstellung elektrischer Verbindungen zwischen peripheren Einrichtungen und einer zentralen Steuereinrichtung stehen heute folgende unterschiedliche Verbindungskonzepte zur Verfügung.

Ein Konzept ist die indirekte Verbindungstechnik. Feldgeräte (Aktoren / Sensoren) befinden sich in Industrieanlagen an unterschiedlichen Orten. Die Einzelleitungen dieser Feldgeräte werden in Unterverteilern so zusammengeführt, dass sie mittels eines mehradrigen Kabels (z.B. 64 Adern) von dort zu einem zentralen Verteilerschrank geführt werden. In diesem Verteilerschrank befinden sich vorinstallierte Durchgangsklemmen. Die Durchgangsklemmen werden sowohl zum Anschluss mehradriger Feldkabel als auch zum Anschluss der Ein-/Ausgänge der zentralen Steuereinrichtung benutzt. Mit Hilfe einer Verdrahtungsliste werden nun die freien Enden der Durchgangsklemmen mit Hilfe eines Drahtes elektrisch verbunden. Diese Drahtverbindung (Rangierverbindung) kann je nach Aufbaukonzept von Hand oder halbautomatisch hergestellt werden.

Ein weiteres Konzept ist die direkte Verbindungstechnik. Die direkte Verbindungstechnik von Feldgeräten mit einer zentralen Steuereinrichtung zeichnet sich dadurch aus, dass man keine zusätzliche Rangierleitung im Verteilerschrank benutzt. Die Feldkabel werden nicht an vorinstallierten Durchgangsklemmen im zentralen Verteilerschrank angeschlossen, sondern werden direkt an den freien Eingang der vorinstallierten Durchgangsklemmen der zentralen Steuereinheit angeschlossen. Dieser Anschluss erfolgt mit Hilfe einer Verdrahtungsliste. Diese Anschlusstechnik kann nur manuell durchgeführt werden.

Die Industrie bietet heute die unterschiedlichsten Arten von Durchgangklemmen als Standardprodukte an. Je nach Wahl der Durchgangsklemme lassen sich unterschiedliche Aufbaukonzepte realisieren.

Die indirekte Verbindungstechnik vor Ort ist bisher eine manuelle Tätigkeit, die nach Abschluss der Projektierung durchzuführen ist. Diese Art der Rangierverdrahtung ist sehr zeitaufwendig. Die Erfahrung zeigt, dass bei dieser Verbindungstechnik mit einer Fehlerquote von ca. 5% zu rechnen ist.

Es ist bereits eine indirekte Verbindungstechnik bekannt, bei welcher die eingesetzten Durchgangsklemmen derart optimiert, dass man mit Hilfe der "Wire-Wrap-Technik" Rangierverbindungen in einem Leittechnikschrank zusammen mit der Elektronik realisieren kann. Die Rangierverbindungen werden mit Hilfe eines Halbautomaten erstellt. Dieser Halbautomat wird durch ein Softwareprogramm gesteuert. Fehlverbindungen sind nicht möglich. Der Nachteil hierbei ist, dass dieser Schrank erst nach Ende der Projektierung beim Hersteller verdrahtet werden kann. Darüber hinaus kann erst nach Aufstellung des Schrankes vor Ort mit der Feldverkabelung begonnen werden. Diese Vorgehensweise hat in der Vergangenheit zur Verlängerung der Projektlaufzeit geführt.

Die direkte Verbindungstechnik ist eine reine manuelle Tätigkeit vor Ort, die ebenfalls mit einer Fehlerquote von ca. 5% belastet ist. Aus Platzgründen wurde diese Art der Anschlusstechnik nie zusammen mit einer Auswerteelektronik in einem Schrank realisiert. Die Feldkabel können erst nach Ende der Projektierung an die Durchgangsklemmen der Auswerteelektronik angeschlossen werden. Das bedeutet aber auch, dass die Feldkabel erst am Ende der Projektierung in die dafür projektierten Schränke verlegt werden können. Auch diese Verbindungstechnik erzwingt einen zeitlich aufeinander folgenden Ablauf der Arbeitsvorgänge. Dies hat zur Folge, dass sich die Projektlaufzeit verlängert.

Aufgabe der vorliegenden Erfindung ist es daher, eine Verteilereinrichtung anzugeben, welche die oben genannten Anforderungen erfüllt.

Diese Aufgabe wird erfindungsgemäß für die eingangs genannte Verteilereinrichtung dadurch gelöst, dass die ankommenden und abgehenden Leitungen über Steckverbindungen mit einem die Rangierdrähte enthaltenen Rangiermodul verbunden sind.

Bei der erfindungsgemäßen Verteilereinrichtung ist die eigentliche Rangiereinheit, das Rangiermodul, von den übrigen Bauteilen der Verteilereinrichtung getrennt.

Durch diese Trennung kann die Kabelverlegung vor Ort parallel zur Projektierung erfolgen. Nachdem die Rangiermodule verdrahtet sind, werden sie vor Ort in einen dafür vorgesehenen Rangierschrank eingebaut und mit den bereits installierten Leitungen verbunden.

Weitere zweckmäßige Ausgestaltungen der Erfindung ergeben sich aus den Unteransprüchen, sowie der Beschreibung eines Ausführungsbeispiels einer Verteilereinrichtung gemäß der vorliegenden Erfindung anhand der beigefügten Zeichnung.

### Es zeigen

- Figur 1: eine Vorderansicht eines Rangiermoduls gemäß der vorliegenden Erfindung,
- Figur 2: einen Querschnitt durch das in Figur 1 dargestellte Rangiermodul,
- Figur 3: eine Vorderansicht auf eine Rangierverteilereinheit, welche aus mehreren der in den Figuren 1 und 2 gezeigten Rangiermodulen besteht,
- Figur 4: einen Querschnitt durch die in Figur 3 dargestellte Rangierverteilereinheit,
- Figur 5: eine Vorderansicht eines Rangierschranks zur Aufnahme der Rangierverteilereinheit mit ankommenden und abgehenden Leitungen,
- Figur 6: einen Querschnitt durch den in Figur 5 dargestellten Rangierschrank zur Aufnahme der Rangierverteilereinheit,

- Figur 7: eine Vorderansicht des in Figur 5 dargestellten Rangierschranks mit eingebauter Rangierverteilereinheit,
- Figur 8: einen Querschnitt durch den in Figur 7 gezeigten Rangierschrank mit einer eingebauten Rangierverteilereinheit,

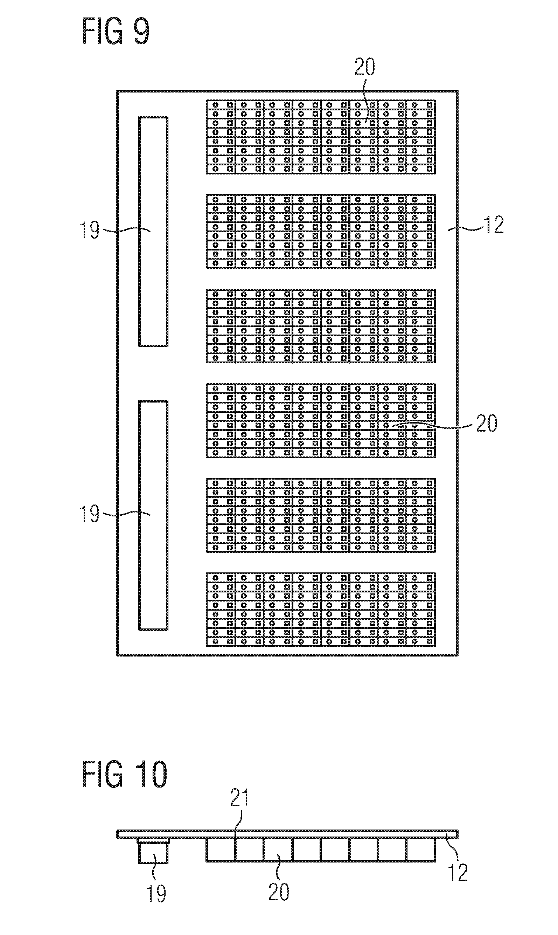

- Figur 9: eine Vorderansicht eines Anschlussmoduls zur Verbindung von abgehenden Leitungen mit dem Rangiermodul und
- Figur 10: einen Querschnitt durch das in Figur 9 dargestellte Anschlussmodul.

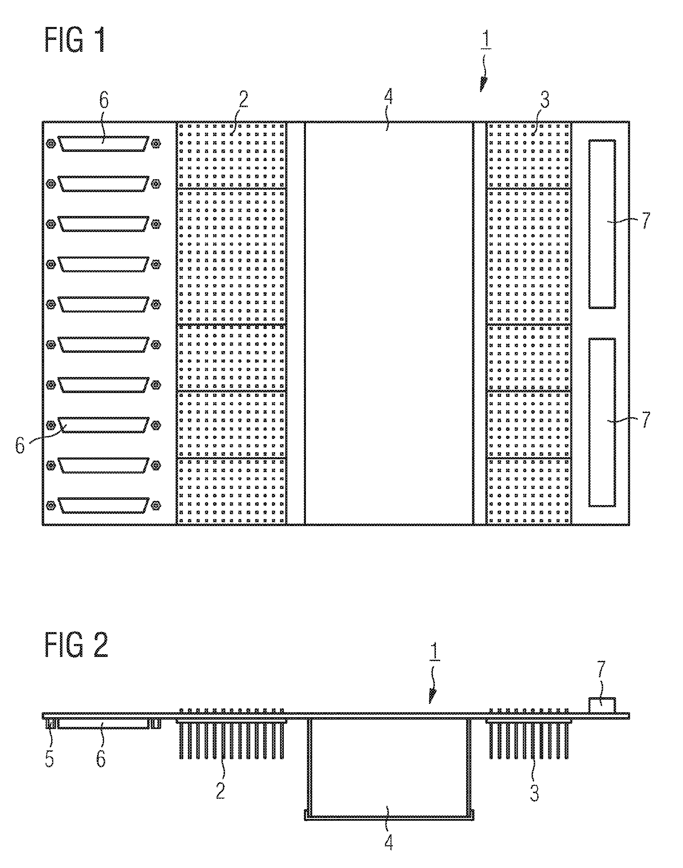

Mittels des in Figur 1 gezeigten Rangiermoduls 1 sollen ankommende Leitungen, welche eine zentrale Steuereinrichtung mit der Verteilereinrichtung verbinden, mit abgehenden Leitungen, welche eine Vielzahl von peripheren Einrichtungen mit der Verteilereinrichtung verbinden, nach einem vorgegebenen Schema miteinander verbunden werden.

Das Rangiermodul 1 besteht im Wesentlichen aus zwei Wrapfeldern 2 und 3. Bei dem hier dargestellten Ausführungsbeispiel ist das Wrapfeld 2 für die von der zentralen Steuereinrichtung kommenden Leitungen vorgesehen und das Wrapfeld 3 ist für die zu den peripheren Einrichtungen abgehenden Leitungen vorgesehen.

Zwischen den beiden Wrapfeldern 2 und 3 liegt ein Kabelkanal 4, welcher die eigentlichen Rangierleitungen, die die beiden Wrapfelder 2 und 3 miteinander verbinden, aufnehmen.

Alle Teile des Rangiermoduls 1 sind auf einer Leiterplatte 5 angeordnet, so auch die Buchsen 6 für hochpolige Steckverbindungen und die Messerleisten 7.

Über Leiterbahnen der Leiterplatte 5 sind die einzelnen Kontakte der Buchsen 6 sowie der Messerleiste 7 jeweils 1:1 mit den Stacheln des Wrapfeldes 2 bzw. den Stacheln des Wrapfeldes 3 verbunden.

Die Buchsen 6 dienen zur Aufnahme von hochpoligen Steckern, welche die von der zentralen Steuereinrichtung ankommende Leitungen 14 abschließen.

Die Messerleisten 7 dienen zur Aufnahme von Federleisten 19, welche Teile eines später zu beschreibenden Anschlussmoduls 12 sind und welche mit den zu den peripheren Einrichtungen abgehenden Leitungen 15 verbunden sind.

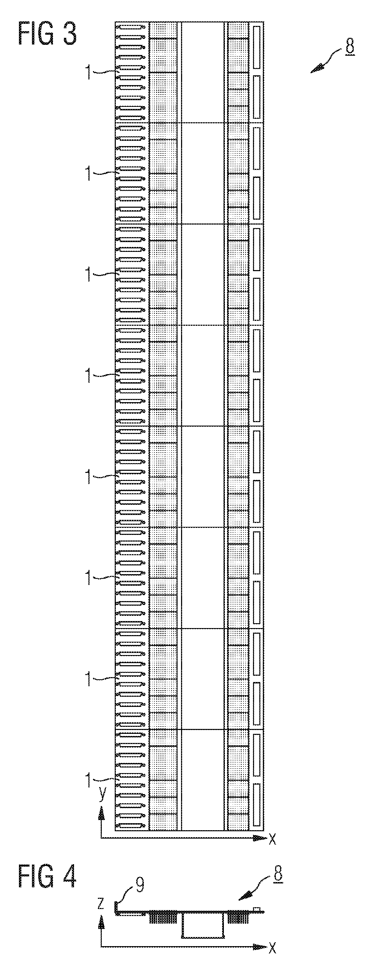

Die Figuren 3 und 4 zeigen eine vollständige Rangierverteilereinheit 8. Diese besteht im dargestellten Ausführungsbeispiel aus acht übereinander angeordneten Rangiermodulen 1, welche auf einem Montageträger 9 montiert sind.

Die einzelnen Rangiermodule 1 sind auf dem Montageträger 9 derart befestigt, dass sie in X- und Y-Richtung spielfrei montiert sind. In Z-Richtung muss jedes Rangiermodul 1 ein Spiel von ca. 6 mm aufweisen. Dieses Spiel ist die Voraussetzung dafür, dass die Kontaktierung der von den peripheren Einrichtungen kommenden Kabel im Rangierschrank vor Ort durchgeführt werden kann.

Diese Rangierverteilereinheit 8 muss zur vollautomatischen Verdrahtung spielfrei montiert sein. Dies kann z.B. durch Zentrierdorne erreicht werden.

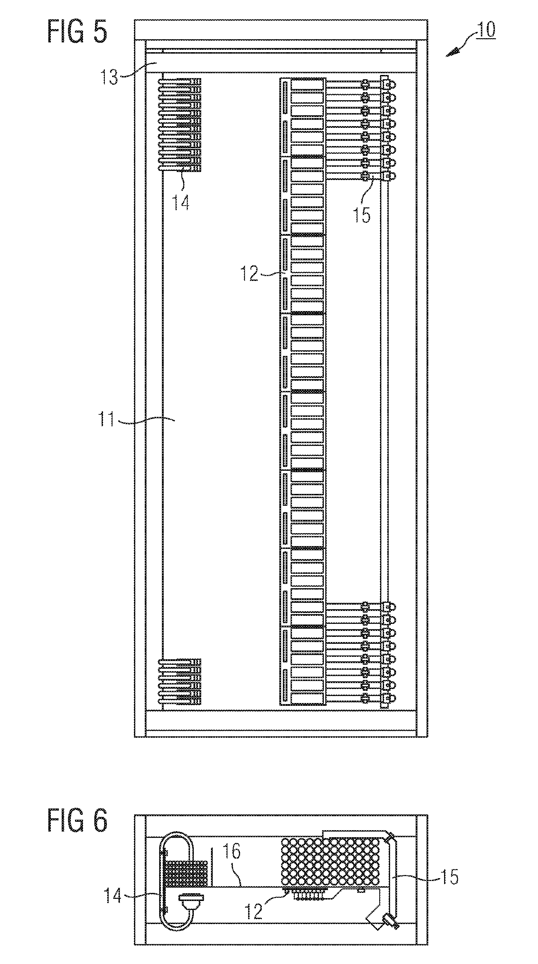

Es kann dann eine komplett verdrahtete Rangierverteilereinheit 8 zu ihrem Einsatzort verschickt werden. Am Einsatzort ist ein in den Figuren 5 und 6 dargestellter Schrank vorgesehen.

Die Figuren 5 und 6 zeigen den Schrank ohne die Rangierverteilereinheit 8. Innerhalb des Schranks 10 ist ein Montageblech 11 vorgesehen, auf welchem die Rangierverteilereinheit 8 sowie die nachstehend beschriebenen Anschlussmodule 12 befestigt sind. Dem Schrank 10 werden die von der Steuereinrichtung ankommenden Leitungen 14 mit abschließenden Steckvorrichtungen sowie die zu den peripheren Einrichtungen abgehenden Leitungen 15 zugeführt.

Die Enden der zu den peripheren Einrichtungen abgehenden Leitungen 15 sind jeweils mit Federkraftklemmen 20 des Anschlussmoduls 12 verbunden.

Das Anschlussmodul 12 besteht aus einer Leiterplatte 21, auf welcher die Federleisten 19 und die einzelnen Federkraftklemmen 20 angebracht sind. Über nicht dargestellte Leiterbahnen der Leiterplatte 21 sind die Federkraftklemmen 20 jeweils 1:1 mit den einzelnen Federn der Federleisten 19 verbunden.

Bei den von der zentralen Steuereinrichtung kommenden Kabel 14 handelt es sich um bewegliche Kabel, welche mit einer hochpoligen Steckvorrichtung abgeschlossen sind.

Am Einsatzort des Rangierschranks 10 wird nun die Rangierverteilereinheit 8 fest mit dem Montageblech 16 des Schranks 10 verbunden.

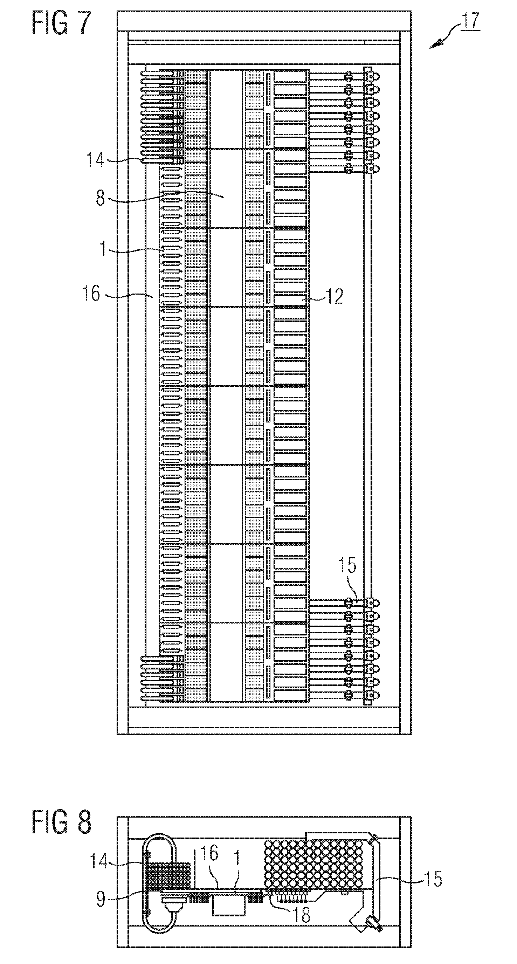

Die Figuren 7 und 8 zeigen den Rangierschrank 10 mit einer eingebauten Rangierverteilereinheit 8.

Die Rangierverteilereinheit 8 wird mit ihrem Montageträger 9 in eine Aufnahmevorrichtung des Montageblechs 16 im Rangierschrank 10 hineingestellt. Diese Aufnahmevorrichtung fixiert die Rangierverteilereinheit 8 in X- und Y-Richtung im Rangierschrank 10 und stellt einen exakten Maßbezug zu den Anschlussmodulen 12 her. Danach wird die Rangierverteilereinheit 8 in die senkrechte Position geschwenkt und mechanisch fest mit dem Montageblech 16 des Schranks 10 verbunden, z.B. mittels Schraubverbindungen. Nun stehen die einzelnen Übergabestecker, d.h. die Messerleisten 7 der Rangiermodule 1 exakt ausgerichtet vor den Übergabesteckern, d.h. den Federleisten 19 der Anschlussmodule 12. Mit manuellem Druck in Z-Richtung können nun die Übergabesteckverbindungen miteinander fixiert werden, damit keine Relativbewegung in den Kontaktpaarungen entsteht. Nach dem Einbau der Rangierverteilereinheit 8 werden alle von der zentralen Steuereinrichtung ankommenden Leitungen 14 mit ihren hochpoligen Steckern an die Rangiermodule 1 angeschlossen.

Es sollen noch einmal die Vorteile zusammengefasst werden, welche die erfindungsgemäße Trennung von eigentlicher Rangierung und Rangierschrank ermöglicht. Diese sind:
Lieferung der Rangierverteilerschränke vor Ende der Projektierung,
Verlegen sowie Anschließen von ankommenden und abgehenden Leitungen können parallel zur Projektierungsphase realisiert werden,
Modularer Aufbau der Rangierverteilereinheit realisierbar,
fehlerfreie vollautomatische Rangierverdrahtung wirtschaftlich realisierbar,
Einsatz von Wire-Wrap-Technik,
Kostenreduzierung um die Hälfte der heutigen Verbindungskosten zwischen zentraler Steuereinrichtung und peripheren Einrichtungen.

Mit den oben genannten Vorteilen werden folgende Projektanforderungen erfüllt:
Kürzeste Projektabwicklungszeit,
kostengünstigste Realisierung dieser Verbindungen,
höchste Verfügbarkeit der Verbindungen,
Erweiterungen und Änderungen von Signalverbindungen vor Ort.

Prinzipiell hat man die Möglichkeit, die Wrapfelder durch andere Kontaktklemmen zu ersetzen. Die dargestellte Rangierverteilereinheit 8 ermöglicht aber durch ihre einfachen Rangierwege wirtschaftliche Realisierungen von Vollautomaten für die Rangierverdrahtung.

Es wäre auch denkbar, mit dieser Lösung Federzugkraftklemmen, Schraubklemmen oder Maxi-Termi-Point-Stifte außerhalb eines Rangierverteilerschrankes vollautomatisch zu verdrahten.

## Patentansprüche

1. Verteilereinrichtung zur festen Verbindung von ankommenden Leitungen mit abgehenden Leitungen,
**dadurch gekennzeichnet,**
**dass** die ankommenden und abgehenden Leitungen über Steckverbindungen mit einem die Rangierdrähte enthaltenen Rangiermodul verbunden sind.

2. Verteilereinrichtung nach Anspruch 1,
**dadurch gekennzeichnet,**
**dass** jedes Rangiermodul jeweils ein Anschluss-Kontaktfeld für die ankommenden und die abgehenden Leitungen aufweist, wobei jeder verteilerseitige Kontakt der Steckverbindungen mit einem Kontakt des Anschluss-Kontaktfeldes verbunden ist, und die beiden Anschluss-Kontaktfelder über Rangierdrähte miteinander verbunden sind.

3. Verteilereinrichtung nach Anspruch 1,
**dadurch gekennzeichnet,**
**dass** das Anschluss-Kontaktfeld ein Wrapfeld ist.

4. Verteilereinrichtung nach Anspruch 2 oder 3,
**dadurch gekennzeichnet,**
**dass** die Steckverbindungen für die ankommenden Leitungen, welche eine zentrale Steuereinrichtung mit der Verteilereinrichtung verbinden, aus Stecker und Buchse bestehende hochpolige Steckverbindungen sind, wobei jeweils ein Teil der hochpoligen Steckverbindung die ankommenden flexiblen Leitungen abschließt und der andere Teil der hochpoligen Steckverbindung ein fester Bestandteil des Rangiermoduls ist.

5. Verteilereinrichtung nach Anspruch 2 oder 3,
**dadurch gekennzeichnet,**
**dass** die Steckverbindungen für die abgehenden Leitungen, welche eine Vielzahl peripherer Einrichtungen mit der Verteilereinrichtung verbinden, aus Federleiste und Messerleiste bestehende hochpolige Steckverbindungen sind, wobei jeweils ein_Teil der hochpoligen Steckverbindung ein fester Bestandteil des Rangiermoduls ist und der andere Teil der hochpoligen Steckverbindung Bestandteil eines Anschlussmoduls ist, an welchem die abgehenden Leitungen angeschlossen sind.

6. Verteilereinrichtung nach einem der vorhergehenden Ansprüche,
**dadurch gekennzeichnet,**
**dass** mehrere Rangiermodule zu einer Rangiereinheit zusammenfassbar sind.
